(19) **Europäisches Patentamt**
**European Patent Office**
**Office européen des brevets**

(11) **EP 1 466 955 B1**

(12) **EUROPEAN PATENT SPECIFICATION**

(45) Date of publication and mention
of the grant of the patent:
**23.11.2011 Bulletin 2011/47**

(51) Int Cl.:
*C09K 11/64* (2006.01)     *C09K 11/80* (2006.01)

(21) Application number: **04252094.0**

(22) Date of filing: **08.04.2004**

(54) **Single crystal scintillators**

Einkristallszintillationsdetektoren

Détecteurs de scintillation avec monocristal

(84) Designated Contracting States:
**DE FR GB NL**

(30) Priority: **09.04.2003 GB 0308118**

(43) Date of publication of application:
**13.10.2004 Bulletin 2004/42**

(73) Proprietors:
• **Schlumberger Technology B.V.**
**2514 JG The Hague (NL)**
Designated Contracting States:
**DE**
• **Services Pétroliers Schlumberger**
**75007 Paris (FR)**
Designated Contracting States:
**FR**
• **Schlumberger Holdings Limited**
**Road Town, Tortola (VG)**
Designated Contracting States:
**GB NL**

(72) Inventors:
• **Lefaucheur, Jean-Luc**
**Motherwell ML1 2SJ (GB)**
• **Brandle, Charles D.**
**Basking Ridge, NJ 07920 (US)**

(74) Representative: **Ford, Michael Frederick et al**
**Schlumberger Cambridge Research Limited**
**High Cross**
**Madingley Road**
**Cambridge CB3 0EL (GB)**

(56) References cited:
**WO-A-01/08453     JP-A- 62 187 786**
**US-A- 4 807 241**

• ZORENKO YU ET AL: "Scintillation properties of Lu3Al5O12:Ce single-crystalline films" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 486, no. 1-2, 21 June 2002 (2002-06-21), pages 309-314, XP004367495 ISSN: 0168-9002
• WU J L ET AL: "SPECTRAL PROPERTIES OF VARIOUS CERIUM DOPED GARNET PHOSPHORS FOR APPLICATION IN WHITE GAN-BASED LEDS" MATERIALS RESEARCH SOCIETY SYMPOSIUM PROCEEDINGS, MATERIALS RESEARCH SOCIETY, PITTSBURG, PA, US, vol. 658, 2001, pages GG1181-GG1186, XP009036120 ISSN: 0272-9172

**Description**

The present invention relates to the field radiation detection and more particularly to single crystal scintillation detectors for gamma rays, x-rays and like radiation.

<u>Background of the Invention</u>

Transparent single crystal scintillators are well known in the art for use as detectors of gamma rays, x-rays, cosmic rays, other types of high energy radiation and energetic particles of approximately 1KeV or above. When radiation is incident on the scintillator secondary photons are generated within the crystal. These secondary photons result from the interaction of the incident radiation and an activation ion contained within the crystal. Once produced, the secondary photons can be optically coupled to a photodetector so as to produce a voltage signal that is directly related to the number and amplitude of the secondary photons. Such crystal scintillators are typically employed for medical imaging such as Positron Emission Tomography (PET), digital radiography, mineral and petroleum exploration.

An ideal detector for the detection of the above radiation and particles employs a single crystal scintillator characterised in that it exhibits:

• A high density so as to provide a high stopping power on the aforesaid radiation or particles;
• A high light output, this results in the production of bright visible light, typically in the blue/UV region of the electromagnetic spectrum, in response to the absorption of the aforesaid radiation or particles;
• A good energy resolution, which is an important characteristic as it allows good event identification, for example in PET applications;
• A short decay time, associated with the ions excited by the aforesaid radiation or particles, so as to provide detectors with a fast response time; and
• A rugged structure so as to reduce the opportunity of accidental damage.

The Prior Art teaches of various single crystal scintillator materials that have been employed in an attempt to satisfy the above criteria. One of the earliest types of scintillator employed was Thallium doped Sodium Iodide (NaI:Tl). Although capable of producing very high light outputs and being relatively inexpensive to produce NaI:Tl exhibits an inherently low density and so has a low incident radiation absorption efficiency. In addition, NaI:Tl is hygroscopic, has a slow scintillation decay time and produces a large persistent afterglow that acts to impair the counting rate performance of the material.

Table 1 provides a summary of some of the main characteristics of NaI:Tl as well as other known scintillator materials. The data within this table are taken from papers and Patents that teach of the relevant crystals, as discussed below. It should be noted that:

• The light output values are relative values measured relative to the light output of NaI:Tl;
• The decay times are measured in nanoseconds and refer to the time it takes for a particular activation ion of a crystal scintillator to luminesce from the excited electronic state;
• The density values are measured in g/cc;
• The emission peak wavelengths are measured in nanometers; and
• The melting point values are measured in °C.

Inorganic metal oxides provide alternative single crystal scintillators devised for gamma ray detection and the like. For example a commonly employed inorganic metal oxide crystal is Bismuth Germanate (BGO). As well as being denser than NaI:Tl, BGO does not suffer from being hygroscopic. However, BGO scintillators have even slower scintillation decay times, exhibit lower light output levels that drop further with increasing temperatures and exhibit poor energy resolution values, as compared to NaI:Tl. In addition the refractive index values for BGO scintillators are relatively high so resulting in significant levels of light being lost through internal reflection processes within the crystal.

Attempts have been made to develop alternative single crystal scintillators that improve on the inherent characteristics of the aforementioned crystals. For example, Cerium activated Yttrium Orthosilicate (YSO) crystals have been developed while European Patent Application No. EP 0,231,693 teaches of a Cerium activated Gadolinium Orthosilicate (GSO) scintillator. The characteristic properties for both of these crystals are summarised in Table 1. Although exhibiting significantly faster scintillation decay times than NaI:Tl or BGO, both YSO and GSO have low densities. The light output and energy resolution values exhibited by YSO are generally good, however the inherent low density makes it a poor candidate for applications such as PET. GSO exhibits a lower light output than YSO but does have a higher density. However, the inherent poor mechanical properties of GSO make such crystals expensive to produce.

Another material that has been the subject of much development over the last few years is Cerium activated Lutetium Silicate (LSO) as taught in US Patent No. 4,958,080 and the equivalent European Patent No. 0,373,976. In particular LSO has become one of the most common crystals presently employed as a single crystal scintillator in PET as these crystals have good properties for such applications (see Table 1). LSO exhibits a fast scintillation decay time, has a fairly high density, high light output values and an average energy resolution. However, one main drawback of employing LSO as a single crystal scintillator is again the fact that it is an extremely expensive crystal to produce. This is due mainly to the fact that the melting point is very high (typically ~2100°C) as compared to other standard oxide crystals.

Further single crystal scintillators have been developed in attempts to improve on the working characteristics of LSO while reducing the production costs. Such attempts concentrate exclusively on introducing a substitute ion at the site of the Lutetium ions within the original LSO structure. In particular US Patent No. US 6,278,832 and the equivalent European Patent Application No. EP 1,004,899 teach of mixed Lutetium Orthosilicate crystals, commonly referred to as MLS crystals. Alternatively, US Patent No. US 6,323,489 teaches of a single crystal of Cerium activated Lutetium Yttrium Oxyorthosilicate (LYSO). Both MLS crystals and LYSO crystals exhibit similar physical properties to LSO but are still expensive to produce since their melting point is only slightly lower that that of LSO.

A further restricting factor that is common to LSO, LYSO and MLS crystals is the fact that they all exhibit only average levels of energy resolution, compared to GSO or NaI:Tl.

US Patent No. US 5,864,141 teaches of a high resolution gamma ray imaging device that employs a Yttrium Aluminium Perovskite (YAP) crystal scintillator while US Patent No. US 5,864,141 teaches of a gamma ray detector based on a Yttrium Aluminium Perovskite (YAP) crystal. A YAP single crystal scintillator is found to exhibit very fast scintillation decay times and provide very good energy resolution and light output levels. However, YAP exhibits low density levels and is again an expensive crystal to produce. The fact that YAP has superior energy resolution than LSO is due to the fact that LSO exhibits a strong non-linearity of energy response which YAP does not suffer from. The superior energy resolution has been attributed to the perovskite structure.

An alternative single crystal scintillator to YAP that is also based on the Aluminium Perovskite structure, is LuAP, which has also been known to those skilled in the art for over a decade. For example, US Patent No. US 5,961.714 teaches of a method of growing Cerium activated Lutetium Aluminium Perovskite (LuAP). LuAP crystal has a significant advantage over YAP in that it exhibits a much higher density and hence a higher stopping power. This characteristic makes LuAP extremely attractive as a gamma-ray scintillator and in particular for employment within PET applications.

The main drawback with LuAP is that it is extremely difficult to manufacture due to the fact that it is metastable at high temperature, which causes decomposition of the perovskite phase at high temperature. Therefore, to date attempts to manufacture LuAP have yielded only small size samples.

Research work has also been conducted on mixed Lutetium Yttrium Aluminium Perovskite crystals e.g. Cerium activated LuYAP, which is basically a mixed crystal of LuAP and YAP. Several references, such as:

- *"Growth and Light Yield Performance of Dense $Ce^{3+}$ doped (Lu,Y)$AlO_3$ Solid Solution Crystals",* by Petrosyan et al, JCG 211 (2000) 252-256;
- *"Development of New Mixed Lu(RE$^{3+}$)AP:Ce Scintillator: Comparison With Other Ce Doped or Intrinsic Scintillating Crystals",* by Cheval et al, Nuclear Inst. And methods in Phys. Res. A443 (2000) 331-341;
- "Intrinsic Energy Resolution and Light Output of the Lu0.7Y0.3AP:Ce Scintillator", by Kuntner et al, Nuclear Inst; and
- Methods in Phys. Res. A 493 (2002) 131-136.

describe the physical properties of a LuYAP crystal that comprises 30% Yttrium and 70% Lutetium. This LuYAP crystal requires such a high level of Yttrium in order for it not to decompose at high temperatures. However, this results in a crystal that exhibits a density and stopping power that is significantly lower than LuAP. For example in the case of LuYAP with a 30% Yttrium level the crystal density becomes comparable with LSO, namely 7.468 g/cc. The decay time of such LuYAP crystals is about 25ns but there also exists a significant long decay time component that is detrimental to applications where a fast crystal scintillator is preferred.

An example of a LuYAP application is described in UK Patent Application No. GB 2,378,112. This Application teaches of a PET camera or scanner comprising a layer of LuYAP crystals employed as scintillation detector. The camera or scanner may also comprise a further layer of scintillating crystals, like LSO or another LuYAP.

Yet another example of a crystal scintillator is described in US Patent Application No. US 2003/0075706. This document teaches of compositions comprising garnet crystal structure, at least one of terbium and lutetium, at least one rare earth element and at last one of aluminium, gallium and indium. The compositions are useful for the detection of X, β and γ radiation, e.g. in computed tomography (CT) scanners.

US 4 807 241 discloses a cathode ray tube, wherein monocrystalline amorphous phosphors are applied like $Lu_3Al_3Ga_2O_{12}$:Ce phosphor.

## EP 1 466 955 B1

Summary of the Invention

It is clearly desirable to be able to provide an affordable single crystal scintillator having as many of the aforementioned desirable properties as possible. Therefore, it is an object of at least one aspect of the present invention to provide a single crystal scintillator capable of detecting gamma rays, x-rays, cosmic rays and similar high energy radiation as well as energetic particles.

It is a further object of at least one aspect of the present invention to provide a single crystal scintillator that exhibits good working characteristics while remaining cost effective to produce.

According to a first aspect of the present invention there is provided a crystal scintillator comprising a transparent single crystal of a Cerium activated mixed Perovskite having a general formula

$$Ce_x Lu_{(1-x-z)} A_z Al_{(1-y)} B_y O_3,$$

wherein

x is within the range of from 0.00005 to 0.2,
y is within the range of from 0.00005 to 0.99,
z is within the range of from 0 to (0.99-x),

where A comprises one or more of the following cations: Y, Sc, La, Pr, Nd, Sm, Eu, Gd, Tb, Dy, Ho, Er, Tm, Yb, In, Ga and B comprises one or both of the following cations: Sc and Ga.

According to a second aspect of the present invention there is provided a crystal scintillator comprising a transparent single crystal of a Cerium activated mixed Perovskite having a general formula

$$Ce_x Lu_{(1-x-z)} A_z Al_{(1-y)} B_y O_3,$$

wherein

x is within the range of from 0.00005 to 0.2,
y is within the range of from 0.0 to 0.99,
z is within the range of from 0.00005 to (0.99-x),

where A comprises one or more of the following cations: Sc, La, Pr, Nd, Sm, Eu, Gd, Tb, Dy, Ho, Er, Tm, Yb, In and B comprises one or both of the following cations: Sc and Ga.

Most preferably A further comprises one or both of the following cations: Y and Ga.

Preferably x is within the range of from 0.0005 to 0.005, y is within the range of from 0.005 to 0.05 and z is within the range of from 0.0005 to 0.05.

Preferably the crystal scintillator has a luminescence decay time within the range of from 15 ns to 45 ns.

Preferably the crystal scintillator has a density of more than 7.5 g/cc.

Preferably the crystal scintillator generates a luminescence wavelength within the range of from 330nm to 440nm.

Preferably the crystal scintillator generates a luminescence wavelength of 365nm.

According to a third aspect of the present invention there is provided a scintillation detector comprising a crystal scintillator in accordance with the first or second aspect of the present invention and a photodetector optically coupled to said crystal scintillator for detecting light emitted from the crystal scintillator.

According to a fourth aspect of the present invention there is provided a scintillation detector comprising two or more a crystal scintillators and a photodetector optically coupled to said crystal scintillators for detecting light emitted from the crystal scintillators wherein at least one of the crystal scintillators comprises a crystal scintillator in accordance with the first or second aspect of the present invention.

Preferably the photodetector comprises a detector selected from the group comprising a photo-multiplier, a photo-diode and a charge-coupled device.

Detailed Description of the Invention

Embodiments of the present invention will now be described, by way of example only and with reference to the accompanying Tables, in which:

> Table 1    presents a summary of characterising properties for crystal scintillators taught in the Prior Art as compared with typical characteristics of a crystal scintillator in accordance with aspects of the present invention; and
>
> Table 2    presents a summary of chemical formulae and starting melts for crystal scintillators produced in accordance with aspects of the present invention.

In order to produce a commercially viable crystal scintillator it is necessary to develop a material that can be produced by a standard growth process. The following embodiments of the present invention employ the Czochralski growth method to produce the crystal scintillators, although any other growth method may be employed. The Czochralski growth method is described in detail by C.D. Brandle in a paper entitled "*Czochralski Growth of Rare-Earth Orthosilicates $(Ln_2SiO_5)$*" published in the Journal of Crystal Growth, Volume 79, Page 308-315, (1986).

A further criterion for a commercially viable crystal scintillator is that it should be physically stable at high temperature, a criterion that is currently lacking in LuAP. By substituting a critical amount of Lu or Al by different trivalent cations, the Perovskite structure can be stabilised so as to prevent metastability of the material at high temperature.

The lack of stability in LuAP can be related to the Goldschmidt tolerance factor that is a measure of the geometric fit of the various atoms based on a hard sphere model and is defined by:

$$t = \left(R_A + R_o\right) \Big/ \left(\sqrt{2}\left(R_B + R_o\right)\right) \tag{1}$$

where

> $R_A$ = radius of the larger cation, e.g. Lu
> $R_B$ = radius of the smaller cation, e.g. Al
> $R_O$ = radius of the oxygen anion, i.e. 1.4Å

As t becomes larger, i.e. approaches unity, the tendency for stability of the Perovskite structure increases. For a given B cation, e.g. Al, the increase in the tolerance factor is also reflected in the unit cell volume. The condition for better stability at high temperature is to have an approximate value for the critical unit cell volume ranging from about $198.7?^3$ to $201.3?^3$.

<u>Example Lutetium Mixed Perovskite Crystal Scintillators</u>

In a particular example (a solid solution of $LuAlO_3$ and $GdScO_3$) is employed to produce a transparent single crystal scintillator, grown by the Czochralski growth method, having a formula:

$$Ce_{0.006}Lu_{0.894}Gd_{0.1}\ Al_{0.9}Sc_{0.1}O_3$$

Initially the following chemical substances (with respective weights) : $Lu_2O_3$ (711.5 g), $Gd_2O_3$ (72.5 g), $Al_2O_3$ (183.9 g), $Sc_2O_3$ (27.6 g) and $CeO_2$ (4.12 g) are loaded into an iridium crucible. The crucible is then loaded into a growth furnace composed of Zirconia insulation and heated by an induction coil under an inert atmosphere containing a small amount of oxygen, typically less than 2%, to prevent evaporation of the various components. The crystal is then pulled from the melt at a slow rate, typically 1mm/h to 2mm/h, and using a rotation rate from 10 to 30 rpm. This method provides a crystal scintillator having a density of 8.202 g/cc (see Table 2), the other characterising parameters are as shown in Table 1.

Further examples of physically stable crystal scintillators grown by the aforementioned Czochralski growth method are presented in Table 2. The starting melt compositions shown were employed since these melts are found to be stable at high temperatures.

It should also be pointed out that for each of the solid solutions, the "dopant perovskite" e.g. $GdScO_3$, $LaAlO_3$ and $YScO_3$ is in itself a congruent melting compound and hence a stable compound.

Seven of the Lutetium Mixed Perovskite crystals described in Table 2 produce Cerium activated Lutetium Mixed Perovskite scintillators where cation substitution has taken place at the Aluminium host sites. In all of the scintillators described in Table 2 a second cation, in addition to the Cerium cations, have been substituted at the Lutetium ions host sites. This has been carried out so as to provide an alternative activation ion and to aid in the chemical stability of the Lutetium Mixed Perovskite crystals.

The described Lutetium Mixed Perovskite crystals provide a number of clear advantages when compared to other materials described in the Prior Art such as LSO, LuAP or YAP (see Table 1), both from a growth process point of view and a performance point of view.

Compared with LuAP, the multiple ionic substitutions employed to modify the physical structure improve the thermal stability of the material. This improved thermal stability renders the growth process scalable to commercial levels since it permits improved yields. Such yields are not readily feasible for LuAP due to the inherent metastability of this material at high temperatures.

The decay time of the described Lutetium Mixed Perovskite crystals, like other perovskite materials (LuAP, YAP), are shorter than LSO. In addition the energy resolution values of these crystals are also of a more advantageous value for use as a scintillator material when compared with those for LSO.

It should also be noted that the higher density and stopping power of the described Lutetium Mixed Perovskite crystals provide these materials with a significant advantage in their use as a crystal scintillator when compared to the typical values associated with both YAP and LuYAP.

The aforementioned crystal scintillators can be readily modified to form a scintillator detector. This is achieved by simply optically coupling one or more of the crystal scintillators to a photodetector. The photodetector then provides an output electrical voltage in response to the secondary photons produced within the crystal scintillators themselves created in response to the absorption of the incident gamma rays, x-rays or high energy particles. A wide variety of photodetectors may be employed and a variety of coupling methods used, as is well known in the art.

In an alternative embodiment the scintillator detector may comprise one or more crystal scintillators, as described above, and one or more crystal scintillators as taught in the Prior Art. All of these crystal scintillators are then coupled to one or more photodetectors, as described previously.

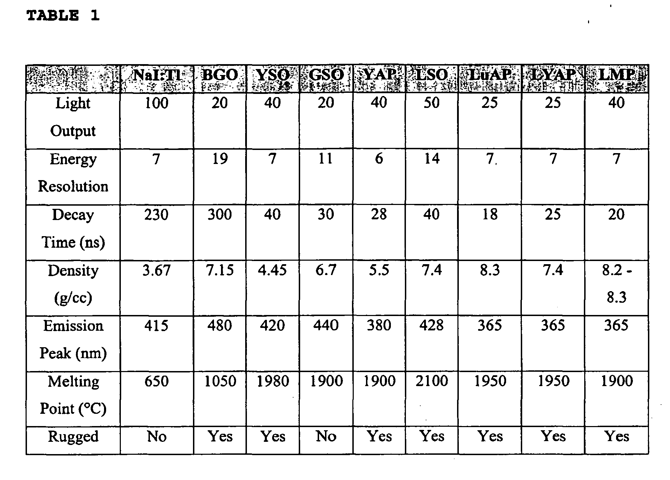

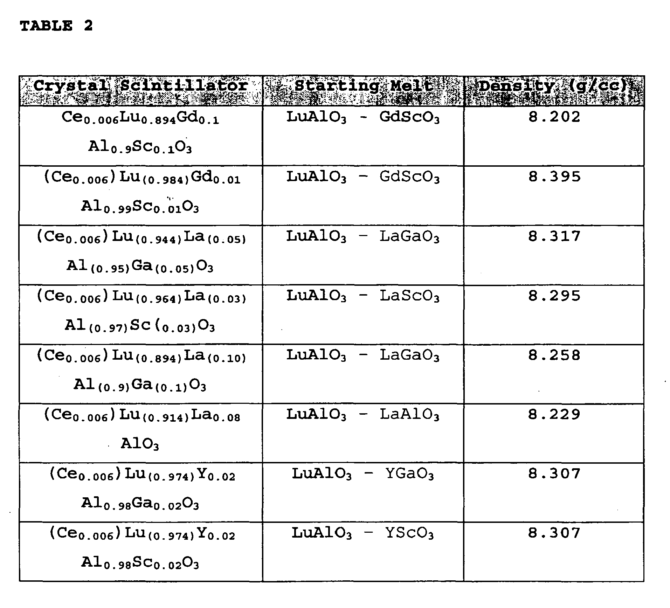

## Claims

1. A crystal scintillator comprising a transparent single crystal of a Cerium activated mixed Perovskite having a general formula

$$Ce_xLu_{(1-x-z)}A_zAl_{(1-y)}B_yO_3,$$

wherein

   x is within the range of from 0.00005 to 0.2,
   B comprises one or both of the following cations: Sc and Ga,

   and where A comprises one or more of the following cations: Y, Sc, La, Pr, Nd, Sm, Eu, Gd, Tb, Dy, Ho, Er, Tm, Yb, In, Ga when

   y is within the range of from 0.00005 to 0.99, and
   z is within the range of from 0 to (0.99-x),

   and where A comprises one or more of the following cations: Sc, La, Pr, Nd, Sm, Eu, Gd, Tb, Dy, Ho, Er, Tm, Yb, In when

   y is within the range of from 0.0 to 0.00005, and
   z is within the range of from 0.00005 to (0.99-x).

2. A crystal scintillator as claimed in Claim 1 wherein A further comprises one or both of the following cations: Y and Ga when
   y is within the range of from 0.0 to 0.00005, and
   z is within the range of from 0.00005 to (0.99-x).

3. A crystal scintillator as claimed in any of the preceding Claims wherein x is within the range of from 0.0005 to 0.005.

4. A crystal scintillator as claimed in any of the preceding Claims wherein y is within the range of from 0.005 to 0.05.

5. A crystal scintillator as claimed in any of the preceding Claims wherein z is within the range of from 0.0005 to 0.05.

6. A crystal scintillator as claimed in any of the preceding Claims wherein the crystal scintillator has a luminescence decay time within the range of from 15 ns to 45 ns.

7. A crystal scintillator as claimed in any of the preceding Claims wherein the crystal scintillator has a density of more than 7.5 g/cc.

8. A crystal scintillator as claimed in any of the preceding Claims wherein the crystal scintillator generates a luminescence wavelength within the range of from 330nm to 440 nm.

9. A crystal scintillator as claimed in any of the preceding Claims wherein the crystal scintillator generates a luminescence wavelength of 365nm.

10. A scintillation detector comprising a crystal scintillator as claimed in any of the preceding Claims and a photodetector optically coupled to said crystal scintillator for detecting light emitted from the crystal scintillator.

11. A scintillation detector comprising two or more crystal scintillators and a photodetector optically coupled to said crystal scintillators for detecting light emitted from the crystal scintillators wherein at least one of the crystal scintillators comprises a crystal scintillator as claimed in Claim 1 to Claim 9.

12. A scintillation detector as claimed in Claim 10 or Claim 11 wherein the photodetector comprises a detector selected from the group comprising a photomultiplier, a photo-diode and a charge-coupled device.


**Patentansprüche**

1. Kristall-Scintillator, der einen transparenten Einkristall aus mit Cerium aktiviertem gemischtem Perowskit mit der allgemeinen Formel

$$C_e xLu_{(1-x-z)}A_zAl_{(1-y)}B_yO_3$$

umfasst, wobei

    x im Bereich von 0,00005 bis 0,2 liegt,
    B ein oder beide der folgenden Kationen enthält: Sc und Ga,
    und wobei A ein oder mehrere der folgenden Kationen enthält: Y, Sc, La, Pr, Nd, Sm, Eu, Gd, Tb, Dy, Ho, Er, Tm, Yb, In und Ga, wenn
    y im Bereich von 0,00005 bis 0,99 liegt und
    z im Bereich von 0 bis (0,99-x) liegt,
    und wobei A ein oder mehrere der folgenden Kationen enthält: Sc, La, Pr, Nd, Sm, Eu, Gd, Tb, Dy, Ho, Er, Tm, Yb und In, wenn
    y im Bereich von 0,0 bis 0,00005 liegt und
    z im Bereich von 0,00005 bis (0,99-x) liegt.

2. Kristall-Scintillator nach Anspruch 1, wobei A ferner ein oder beide der folgenden Kationen enthält: Y und Ga, wenn y im Bereich von 0,0 bis 0,00005 liegt und z im Bereich von 0,00005 bis (0,99-x) liegt.

3. Kristall-Scintillator nach einem der vorhergehenden Ansprüche, wobei x im Bereich von 0,0005 bis 0,005 liegt.

4. Kristall-Scintillator nach einem der vorhergehenden Ansprüche, wobei y im Bereich von 0,005 bis 0,05 liegt.

5. Kristall-Scintillator nach einem der vorhergehenden Ansprüche, wobei z im Bereich von 0,0005 bis 0,05 liegt.

6. Kristall-Scintillator nach einem der vorhergehenden Ansprüche, wobei der Kristall-Scintillator eine Lumineszenz-Abfallzeit im Bereich von 15 ns bis 45 ns besitzt.

7. Kristall-Scintillator nach einem der vorhergehenden Ansprüche, wobei der Kristall-Scintillator eine Dichte von mehr als 7,5 g/cm$^3$ besitzt.

**8.** Kristall-Scintillator nach einem der vorhergehenden Ansprüche, wobei der Kristall-Scintillator eine Lumineszenzwellenlänge im Bereich von 330 nm bis 440 nm erzeugt.

**9.** Kristall-Scintillator nach einem der vorhergehenden Ansprüche, wobei der Kristall-Scintillator eine Lumineszenzwellenlänge von 365 nm erzeugt.

**10.** Scintillationsdetektor, der einen Kristall-Scintillator nach einem der vorhergehenden Ansprüche und einen Photodetektor, der mit dem Kristall-Scintillator optisch gekoppelt ist, um Licht, das von dem Kristall-Scintillator emittiert wird, zu detektieren, umfasst.

**11.** Scintillationsdetektor, der zwei oder mehr Kristall-Scintillatoren und einen Photodetektor, der mit den Kristall-Scintillatoren optisch gekoppelt ist, um Licht, das von den Kristall-Scintillatoren emittiert wird, zu detektieren, umfasst, wobei wenigstens einer der Kristall-Scintillatoren einen Kristall-Scintillator nach Anspruch 1 bis Anspruch 9 umfasst.

**12.** Scintillationsdetektor nach Anspruch 10 oder Anspruch 11, wobei der Photodetektor einen Detektor umfasst, der aus der Gruppe gewählt ist, die einen Photovervielfacher, eine Photodiode und eine ladungsgekoppelte Vorrichtung umfasst.

## Revendications

**1.** Scintillateur cristallin comprenant un monocristal transparent d'une pérovskite mixte activée par du cérium répondant à la formule général :

$$Ce_xLu_{(1-x-z)}A_zAl_{(1-y)}\ ByO_3,$$

où

    x est dans la gamme de 0,00005 à 0,2,
    B comprend l'un des cations suivants ou les deux : Sc et Ga,

et où A comprend l'un ou plusieurs des cations suivants : Y, Sc, La, Pr, Nd, Sm, Eu, Gd, Tb, Dy, Ho, Er, Tm, Yb, In, Ga, lorsque

    y est dans la gamme de 0,00005 à 0,99, et
    z est dans la gamme de 0 à (0,99-x),

et où A comprend l'un ou plusieurs des cations suivants : Sc, La, Pr, Nd, Sm, Eu, Gd, Tb, Dy, Ho, Er, Tm, Yb, In, lorsque

    y est dans la gamme de 0,0 à 0,00005, et
    z est dans la gamme de 0,00005 à (0,99-x).

**2.** Scintillateur cristallin selon la revendication 1, dans lequel A comprend en outre l'un des cations suivants ou les deux : Y et Ga, lorsque
y est dans la gamme de 0,0 à 0,00005, et
z est dans la gamme de 0,00005 à (0,99-x).

**3.** Scintillateur cristallin selon l'une quelconque des revendications précédentes, dans lequel x est dans la gamme de 0,0005 à 0,005.

**4.** Scintillateur cristallin selon l'une quelconque des revendications précédentes, dans lequel y est dans la gamme de 0,005 à 0,05.

**5.** Scintillateur cristallin selon l'une quelconque des revendications précédentes, dans lequel z est dans la gamme de 0,0005 à 0,05.

**6.** Scintillateur cristallin selon l'une quelconque des revendications précédentes, dans lequel le scintillateur cristallin a un temps de décroissance de la luminescence dans la gamme de 15 ns à 45 ns.

**7.** Scintillateur cristallin selon l'une quelconque des revendications précédentes, dans lequel le scintillateur cristallin a une densité de plus de 7,5 g/cm³.

**8.** Scintillateur cristallin selon l'une quelconque des revendications précédentes, dans lequel le scintillateur cristallin génère une longueur d'onde de luminescence dans la gamme de 330 nm à 440 nm.

**9.** Scintillateur cristallin selon l'une quelconque des revendications précédentes, dans lequel le scintillateur cristallin génère une longueur d'onde de luminescence de 365 nm.

**10.** Détecteur de scintillation comprenant un scintillateur cristallin selon l'une quelconque des revendications précédentes et un photodétecteur optiquement couplé audit scintillateur cristallin pour détecter la lumière émise par le scintillateur cristallin.

**11.** Détecteur de scintillation comprenant deux ou plusieurs scintillateurs cristallins et un photodétecteur optiquement couplé auxdits scintillateurs cristallins pour détecter la lumière émise par les scintillateurs cristallins, dans lequel au moins l'un des scintillateurs cristallins comprend un scintillateur cristallin selon l'une des revendications 1 à 9.

**12.** Détecteur de scintillation selon la revendication 10 ou 11, dans lequel le photodétecteur comprend un détecteur sélectionné dans le groupe comprenant un photomultiplicateur, une photodiode et un dispositif à couplage de charge.

**TABLE 1**

| | NaI:Tl | BGO | YSO | GSO | YAP | LSO | LuAP | LYAP | LMP |
|---|---|---|---|---|---|---|---|---|---|
| Light Output | 100 | 20 | 40 | 20 | 40 | 50 | 25 | 25 | 40 |
| Energy Resolution | 7 | 19 | 7 | 11 | 6 | 14 | 7. | 7 | 7 |
| Decay Time (ns) | 230 | 300 | 40 | 30 | 28 | 40 | 18 | 25 | 20 |
| Density (g/cc) | 3.67 | 7.15 | 4.45 | 6.7 | 5.5 | 7.4 | 8.3 | 7.4 | 8.2 - 8.3 |
| Emission Peak (nm) | 415 | 480 | 420 | 440 | 380 | 428 | 365 | 365 | 365 |
| Melting Point (°C) | 650 | 1050 | 1980 | 1900 | 1900 | 2100 | 1950 | 1950 | 1900 |
| Rugged | No | Yes | Yes | No | Yes | Yes | Yes | Yes | Yes |

**TABLE 2**

| Crystal Scintillator | Starting Melt | Density (g/cc) |
|---|---|---|
| $Ce_{0.006}Lu_{0.894}Gd_{0.1}$ $Al_{0.9}Sc_{0.1}O_3$ | $LuAlO_3 - GdScO_3$ | 8.202 |
| $(Ce_{0.006})Lu_{(0.984)}Gd_{0.01}$ $Al_{0.99}Sc_{0.01}O_3$ | $LuAlO_3 - GdScO_3$ | 8.395 |
| $(Ce_{0.006})Lu_{(0.944)}La_{(0.05)}$ $Al_{(0.95)}Ga_{(0.05)}O_3$ | $LuAlO_3 - LaGaO_3$ | 8.317 |
| $(Ce_{0.006})Lu_{(0.964)}La_{(0.03)}$ $Al_{(0.97)}Sc_{(0.03)}O_3$ | $LuAlO_3 - LaScO_3$ | 8.295 |
| $(Ce_{0.006})Lu_{(0.894)}La_{(0.10)}$ $Al_{(0.9)}Ga_{(0.1)}O_3$ | $LuAlO_3 - LaGaO_3$ | 8.258 |
| $(Ce_{0.006})Lu_{(0.914)}La_{0.08}$ $AlO_3$ | $LuAlO_3 - LaAlO_3$ | 8.229 |
| $(Ce_{0.006})Lu_{(0.974)}Y_{0.02}$ $Al_{0.98}Ga_{0.02}O_3$ | $LuAlO_3 - YGaO_3$ | 8.307 |
| $(Ce_{0.006})Lu_{(0.974)}Y_{0.02}$ $Al_{0.98}Sc_{0.02}O_3$ | $LuAlO_3 - YScO_3$ | 8.307 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0231693 A
- US 4958080 A
- EP 0373976 A
- US 6278832 B
- EP 1004899 A
- US 6323489 B

- US 5864141 A
- US 5961714 A
- GB 2378112 A
- US 20030075706 A
- US 4807241 A

**Non-patent literature cited in the description**

- **Petrosyan et al.** *JCG,* 2000, vol. 211, 252-256
- **Cheval et al.** *Nuclear Inst. And methods in Phys. Res.,* 2000, vol. A443, 331-341

- *Methods in Phys. Res. A,* 2002, vol. 493, 131-136
- *Journal of Crystal Growth,* 1986, vol. 79, 308-315